# FASCICULE DE BREVET EUROPEEN

(11) **EP 3 105 069 B1**
(45) Date de publication et mention de la délivrance du brevet: **20.02.2019**
(21) Numéro de dépôt: 14828249.4
(22) Date de dépôt: 19.12.2014
(51) Int. Cl.: B60C 27/16

(54) **CHEMIN DE ROULEMENT D'UN DISPOSITIF ANTIDERAPANT POUR PNEUMATIQUE DE VEHICULE AUTOMOBILE AVEC PATIN MONOLITHIQUE**
LAUFFLÄCHE EINER SCHNEEKETTE FÜR EIN FAHRZEUGREIFEN MIT EINER MONOLITISCHEN GREIFPLATTE
TREAD OF AN ANTI-SKID DEVICE FOR A PNEUMATIC TYRE COMPRISING A MONOLITHIQUE GRIPPING PLATE

(30) Priorité: 11.02.2014 FR 1451056
(43) Date de publication de la demande: 21.12.2016
(73) Titulaire: Joubert Productions, 63600 Ambert (FR)
(72) Inventeur: JOUBERT, Xavier, F-63600 Ambert (FR); JOUBERT, Thierry, F-63600 Ambert (FR); KAELIN, Régis, F-63600 Saint Ferreol Des Côtes (FR); PAILLARD, Thomas, F-63670 Orcet (FR)
(74) Mandataire: Cabinet Laurent & Charras
(86) Numéro de dépôt international: PCT/FR2014/053448
(87) Numéro de publication internationale: WO 2015/121547

(56) Documents cités:
- EP-A1- 0 298 905
- CH-A5- 679 921
- US-A- 3 028 901

## Description

### DOMAINE TECHNIQUE

L'invention se rapporte au domaine des dispositifs antidérapants pour pneumatiques de roues de véhicules automobiles. De tels dispositifs se présentent généralement sous la forme d'un chemin de roulement comportant une pluralité de chaines, une bande textile, un filet, voire des patins, présentant des propriétés antidérapantes, ces éléments à fonction antidérapantes étant rapportés ou fixés sur la bande de roulement d'un pneumatique automobile. Ces dispositifs antidérapants sont ainsi rapportés sur des roues de véhicules en cas de présence de neige ou de glace sur la chaussée.

L'invention vise plus particulièrement un patin antidérapant destiné à former l'un des éléments disjoints d'un chemin de roulement. Chaque patin antidérapant est ainsi positionné entre deux éléments de jonction consécutifs, de façon à former le chemin de roulement intégral rapporté sur la roue d'un véhicule.

### ETAT ANTERIEUR DE LA TECHNIQUE

De façon générale, et tel que décrit notamment dans les documents EP 2 059 399 et EP 0 298 905, il est connu de réaliser un patin antidérapant monolithique en matériau polymère pour réaliser un chemin de roulement continu d'un dispositif antidérapant pour pneumatique de véhicule automobile selon le préambule de la revendication 1. Ainsi, un tel patin antidérapant est solidarisé avec des éléments de jonction, formés notamment par des chaines à maillons. L'extrémité des chaines à maillons est alors insérée dans une fente ménagée au sein du patin antidérapant, et une broche de forme particulière est positionnée partiellement à l'intérieur de la maille d'extrémité empêchant le coulissement du maillon à l'extérieur de la fente.

Cependant, de tels patins antidérapants sont relativement rigides puisque la jonction entre les maillons d'extrémité et le patin antidérapant est réalisé par un coincement du maillon d'extrémité à l'intérieur d'une fente en matériau polymère. Ainsi, comme le matériau polymère formant le patin antidérapant doit être très rigide et résistant, ce type de patin antidérapant ne comporte pas de capacité de déformation. Une fois que la neige compactée ou que la glace vient remplir totalement la portion centrale creuse du patin, un tel type de patin perd une partie de ses caractéristiques antidérapantes.

Le document US 3 028 901 décrit un dispositif antidérapant, dont le chemin de roulement est limitativement constitué de patins monolithiques, comportant un insert rigide susceptible de recevoir une enveloppe en matière plastique.

En outre, dans le cadre des systèmes antidérapants dits frontaux, c'est-à-dire dans lesquels lesdits systèmes ne sont fixés sur le pneumatique que par la zone frontale de la roue, et donc en l'absence de tout moyen de fixation au niveau de la zone interne de ladite roue, il s'avère nécessaire de disposer d'une épaisseur réduite, typiquement inférieure à 9 millimètres. Or les dispositifs connus à ce jour ne permettent pas d'allier à la fois une épaisseur aussi réduite et une efficacité certaine de l'adhérence du pneumatique muni de tels systèmes sur une chaussée enneigée ou verglacée, notamment lorsqu'ils sont constitués de chaines continues.

En effet, on se heurte à des difficultés inhérentes à la fixation mécanique des patins antidérapants avec les autres éléments du chemin de roulement de tels systèmes.

Ainsi, le but de l'invention est de réaliser un patin antidérapant qui soit à la fois résistant aux sollicitations en traction, notamment engendrées lors d'un freinage d'urgence, et qui soit également sensiblement souple et/ou déformable de façon à évacuer constamment la neige présente au niveau d'une portion centrale de celui-ci, tout en conservant des propriétés antidérapantes optimisées, et enfin, qui permette de solidariser de manière efficace ledit patin aux éléments du chemin de roulement assurant leur liaison entre eux.

### EXPOSÉ DE L'INVENTION

L'invention concerne donc un chemin de roulement continu d'un dispositif antidérapant pour roues de véhicule automobile. Ce chemin de roulement est destiné à être rapporté sur la bande de roulement dudit pneumatique, ledit chemin de roulement étant défini par une pluralité de patins monolithiques solidarisés entre eux par des éléments de jonction adjacents.

Selon l'invention, les patins antidérapants comportent au moins un insert rigide, notamment métallique, et de manière générale, réalisé en un matériau de dureté élevée, chaque insert comportant :
- une direction longitudinale destinée à être orientée dans le sens de la largeur d'une roue de véhicule, et
- des moyens de solidarisation agencés respectivement à proximité d'une extrémité de l'insert selon la direction longitudinale, permettant la solidarisation de ces patins antidérapants avec deux éléments de jonction juxtaposés du dispositif antidérapant.

Par ailleurs, et selon l'invention, le patin antidérapant comporte une enveloppe formée dans un matériau polymère à l'intérieur de laquelle ledit au moins un insert est au moins partiellement noyé.

Autrement dit, les inserts métalliques des patins antidérapants sont destinés à être agencés dans la largeur de la roue, de façon à ce que la direction longitudinale de l'insert soit agencée en regard d'un élément de jonction.

Cet insert peut être unique dans chaque patin, et notamment s'étendre le long des zones latérales dudit patin, de telle sorte à optimiser la solidarisation dudit patin aux deux éléments de jonction qui lui sont adjacents.

Selon une forme de réalisation de l'invention, les moyens de solidarisation du patin auxdits éléments de jonction adjacents sont constitués par des orifices débouchants, ces derniers étant destinés à être traversés par des agrafes, elles-mêmes solidarisées auxdits éléments de jonction adjacents.

Selon cette configuration, l'enveloppe formée en matériau polymère de chaque patin antidérapant peut présenter des lamages agencés autour des orifices débouchants des inserts de façon à ne pas générer de surépaisseur au niveau de la zone de sertissage ou de rivetage des agrafes avec l'enveloppe du patin antidérapant. La profondeur des lamages est ainsi sensiblement égale à l'épaisseur desdites agrafes et/ou des rivets métalliques les traversant.

Par ailleurs, de tels inserts métalliques sont partiellement surmoulés par un matériau polymère formant l'enveloppe destinée à être en contact avec le pneumatique de la roue. Un tel matériau polymère permet ainsi de ne pas endommager le pneumatique au contact du patin antidérapant lors de l'utilisation d'un tel dispositif antidérapant et en outre, permet d'optimiser la forme de la surface du patin destinée à venir en contact avec la chaussée, dans le but d'optimiser la fonction d'adhérence du dispositif antidérapant sur la chaussée enneigée.

Un tel matériau polymère peut notamment être choisi dans le groupe comportant les élastomères, et notamment le polyuréthane. Le polyuréthane choisi pour former l'enveloppe du patin peut par exemple présenter une souplesse relativement importante, garantissant une bonne élasticité de ce patin, et conférant par conséquent une capacité de déformation au niveau d'une portion centrale du patin. Un tel matériau peut notamment présenter une dureté comprise entre 75 et 90 Shore A et qui est avantageusement choisie supérieure à la dureté utilisée pour réaliser les éléments de jonction, pouvant eux-mêmes être réalisés en polyuréthane.

L'insert peut être métallique, et notamment en acier ou en titane. Il peut cependant être réalisé en tout matériau de dureté élevée, tel qu'en matériau composite.

Avantageusement, un tel patin antidérapant peut comporter une portion centrale en matériau polymère comportant une pluralité d'ouvertures ou d'alvéoles, notamment issues de moulage. Ce faisant, on réalise un allégement du dispositif, et en outre, on crée des formes faisant fonction de crampons, optimisant l'adhérence sur la neige.

En d'autres termes, une telle portion centrale en matériau polymère présente des ouvertures, de telles ouvertures peuvent permettre d'améliorer la capacité d'évacuation de la neige contenue à l'intérieur des ouvertures à chaque rotation de la roue, et donc à chaque contact d'un patin antidérapant avec la neige.

En pratique, tout ou partie des ouvertures de la portion centrale peuvent être débouchantes.

Ainsi, les ouvertures de la portion centrale sont profondes et permettent de générer un effet crampon

Selon un mode de réalisation particulier, tout ou partie des ouvertures peuvent présenter une forme hexagonale.

Avantageusement, la portion centrale en matériau polymère peut comporter une surface nervurée destinée à augmenter localement l'épaisseur de cette portion centrale.

De cette façon, la surface nervurée permet d'augmenter localement la profondeur des ouvertures, et par conséquent également l'effet crampon recherché. De telles nervures formant la surface nervurée permettent également d'améliorer les caractéristiques techniques de résistance en torsion et/ou flexion du patin antidérapant.

En pratique, le au moins un insert peut comporter des zones poinçonnées formant une pluralité de protubérances émergeant de l'enveloppe en matériau polymère du patin.

Selon ce mode de réalisation, chaque insert métallique peut donc comporter une pluralité de protubérances obtenues par la découpe de sa surface, puis le pliage de cette découpe dans une direction sensiblement perpendiculaire par rapport au plan défini par l'insert métallique. En effet, un tel insert métallique se présente généralement sous la forme d'une tôle plane et les découpes permettent quant à elles d'améliorer l'adhérence d'un patin antidérapant sur une surface glacée. L'obtention de ces protubérances peut résulter des technologies bien connues de la métallurgie, et notamment peuvent résulter de moulage ou de forgeage, ou de découpe - emboutissage.

Outre ces zones poinçonnées, l'insert métallique peut également comporter une pluralité d'agencements, tels que des découpes de la périphérie de l'insert ou des orifices permettant d'améliorer la cohésion entre l'insert métallique et le matériau polymère de surmoulage.

Les protubérances émergeant de l'enveloppe polymère sont ainsi toutes orientées en direction d'une surface du patin antidérapant destinée à être en contact avec la chaussée, et non avec la roue du véhicule.

Par ailleurs, de telles protubérances peuvent comporter chacune une forme rectiligne ou une pointe.

En d'autres termes, les protubérances consistent en une extrémité de la découpe dans l'insert métallique. Par conséquent, la forme rectiligne est due à une longueur de découpe sensiblement supérieure à l'épaisseur de l'insert métallique.

En outre, les protubérances peuvent être agencées les unes par rapport aux autres selon des orientations perpendiculaires et parallèles.

Autrement dit, les zones poinçonnées sont agencées de façon symétrique et permettent de réaliser un réseau de protubérances selon deux groupes de protubérances parallèles, chaque groupe comportant une orientation perpendiculaire par rapport à celle de l'autre groupe. Selon un mode de réalisation particulier, les protubérances peuvent être orientées à 45° et/ou à 135° par rapport à la direction longitudinale des inserts.

Ainsi, l'orientation des protubérances d'un premier groupe peut être réalisée à 45° par rapport à la direction longitudinale des inserts métalliques, tandis que l'orientation du deuxième groupe est orientée à 135° par rapport à cette même direction longitudinale. Un tel mode de réalisation permet ainsi de garantir une bonne adhérence du patin antidérapant avec la chaussée, lorsque celle-ci est glacée notamment. Elle permet également de conférer une bonne adhérence du patin sur la chaussée lors d'un virage, quel que soit le rayon de braquage des roues.

Avantageusement, les protubérances peuvent émerger de l'enveloppe en matériau polymère d'une hauteur sensiblement égale à celle de la surface nervurée de la portion centrale.

Un tel agencement, permet en outre d'améliorer le confort de conduite d'un véhicule équipé de tels dispositifs antidérapants. En effet, dans le cas où les protubérances émergent de l'enveloppe de façon sensiblement supérieure à celle de la portion centrale, un bruit de roulement important, produit par les inserts métalliques, serait ressenti dans le véhicule. Il s'en suivrait en outre une usure prématurée de ces protubérances et un endommagement de la chaussée en l'absence de neige ou de glace.

### DESCRIPTION SOMMAIRE DES FIGURES

La manière de réaliser l'invention, et les avantages qui en découlent, ressortiront bien de la description du mode de réalisation qui suit, donné à titre indicatif, et non limitatif, à l'appui des figures annexées, dans lesquelles :
- la figure 1 est une vue en perspective partielle d'un dispositif antidérapant équipé de patins antidérapants conformes à l'invention ;
- les figures 2 et 3 sont des vues en perspective d'un patin antidérapant conforme à l'invention ;
- la figure 4 est une vue de face d'un patin antidérapant conforme à l'invention.

### MODE DE REALISATION DE L'INVENTION

Comme déjà évoqué, l'invention concerne un patin antidérapant monolithique destiné à équiper un dispositif antidérapant pour roues de véhicule.

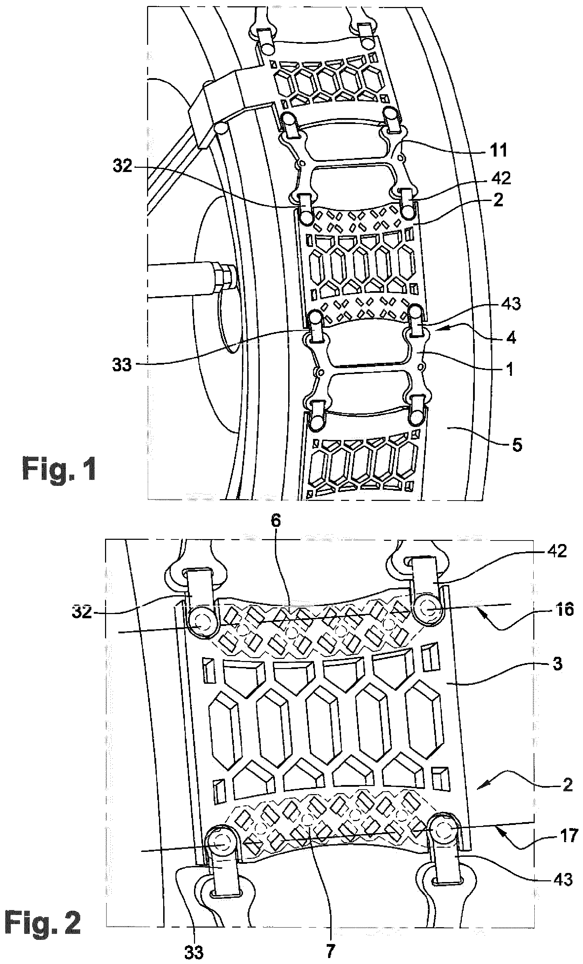

Tel que représenté à la figure 1, un tel patin antidérapant **2** est rapporté à la périphérie d'une roue de véhicule **5** et est maintenu au contact de cette roue au moyen d'une pluralité d'éléments de jonction **1** et **11** permettant de définir, avec les patins antidérapants monolithiques **2,** un chemin de roulement continu agencé au contact de la bande de roulement d'un pneumatique d'une roue **5.**

Par ailleurs, les patins antidérapants **2** sont, dans l'exemple décrit, solidarisés avec les éléments de jonction **1, 11** au moyen d'agrafes **32, 33, 42, 43,** lesdites agrafes formant une boucle passant au travers des éléments de jonction **1, 11** et du patin antidérapant **2.**

Telles que représentées à la figure 2, de telles agrafes **32, 33, 42, 43** comportent deux extrémités agencées au regard du patin antidérapant **2** et serties ou rivetées entre elles en passant au travers du patin antidérapant **2.**

Par ailleurs, et tel que représenté, un tel patin antidérapant **2** comporte deux inserts métalliques **6, 7** agencés à l'intérieur d'une enveloppe **3** réalisée en un matériau polymère. De tels inserts **6, 7** comportent en outre une direction longitudinale **16, 17,** destinée à s'étendre dans le sens de la largeur du pneumatique de la roue du véhicule. De telles directions longitudinales **16, 17** des inserts métalliques **6, 7** sont ainsi agencées parallèlement à l'intérieur de l'enveloppe polymère **3.**

Si, dans l'exemple décrit, on a représenté deux inserts au sein d'un même patin, il peut être envisagé, sans pour autant sortir du cadre de la présente invention, de prévoir un seul insert pour ledit patin. Dans ce cas, l'insert peut adopter une forme propre à permettre de s'étendre selon toute la périphérie dudit patin.

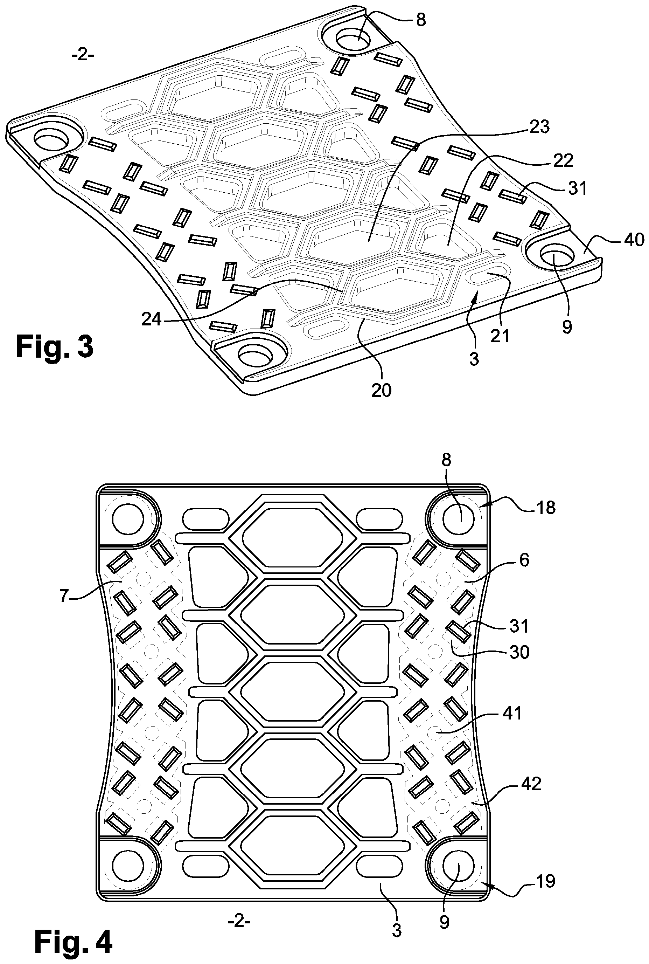

Tel que représenté à la figure 3, le patin antidérapant **2** comporte des orifices débouchants **8, 9** ménagés à l'intérieur de chaque insert métallique **6, 7.** De tels orifices débouchants **8, 9** permettent alors le passage d'un élément de solidarisation des agrafes **32, 33, 42, 43,** tel qu'un rivet ou toute pièce de sertissage indémontable.

Par ailleurs, et tel que représenté, le patin antidérapant peut comporter des lamages **40** agencés à proximité des orifices débouchant **8, 9.** Ces lamages **40** sont agencés au niveau d'une surface supérieure du patin antidérapant **2** destinée à venir au contact de la chaussée, et d'une surface inférieure du patin antidérapant **2** destinée à venir au contact du pneumatique de la roue du véhicule. De tels lamages **40** permettent ainsi d'intégrer à l'intérieur de l'épaisseur du patin antidérapant **2** les extrémités de chaque agrafe et/ ou les moyens de sertissage de ces agrafes **32, 33, 42, 43.**

Tel que représenté, le patin antidérapant **2** comporte également une portion centrale **20** réalisée, dans l'exemple décrit, uniquement au moyen de l'enveloppe **3** réalisée dans le matériau polymère. Une telle portion centrale **20** comporte des ouvertures **21, 22, 23** qui peuvent être débouchantes. De cette façon, les ouvertures **21, 22, 23** permettent de laisser le pneumatique apparent lorsqu'un tel patin **2** antidérapant est positionné sur une roue de véhicule.

De plus, la forme des ouvertures **23** peut être avantageusement hexagonale. Un tel mode de réalisation permet en effet de garantir une bonne résistance à la torsion et/ou la flexion tout en permettant une capacité de déformation en traction et en compression dans une direction perpendiculaire à la direction longitudinale des deux inserts métalliques **6, 7.**

En outre, la portion centrale **20** peut également comporter une surface nervurée **24** permettant d'augmenter la profondeur des ouvertures **21, 22, 23** et également la raideur en torsion et en flexion de la portion centrale **20.**

Enfin, tel que représenté à la figure 4, les orifices débouchant **8, 9** des inserts métalliques **6, 7** sont ménagés au niveau des extrémités **18** et **19** de chaque insert **6.** Ainsi, les inserts métalliques **6, 7** s'étendent sensiblement sur toute la largeur du patin antidérapant **2.**

Tel que représenté, les inserts métalliques **6, 7** comportent des zones poinçonnées **30** permettant de former des protubérances **31** s'étendant sensiblement perpendiculairement par rapport au plan défini par chaque insert métallique **6, 7.** De telles protubérances **31** émergent alors de l'enveloppe **3** définie par le matériau polymère du patin antidérapant **2.** Par ailleurs, de telles protubérances **31** peuvent se présenter sous la forme d'une arrête rectiligne dont l'épaisseur correspond à l'épaisseur de chaque insert métallique **6, 7.** La longueur de ces protubérances **31** est quant à elle choisie en fonction des performances d'adhérence souhaitées, notamment sur une chaussée recouverte de glace.

De telles protubérances **31** peuvent ainsi former deux groupes comportant deux orientations distinctes par rapport à la direction longitudinale des inserts **6, 7.** Un premier groupe peut être orienté à 45° par rapport à la direction longitudinale des inserts métalliques et un deuxième groupe peut être orienté à 135° par rapport à cette même direction longitudinale.

De plus, de façon à améliorer la cohésion entre l'insert métallique **6** et l'enveloppe **3,** des orifices **41** peuvent être ménagés à l'intérieur de chaque insert **6.** La matière constitutive de l'enveloppe **3,** et typiquement du polyuréthane, peut ainsi fluer au travers de chaque insert métallique **6.** De même, des découpes latérales **42** de chaque insert métallique **6** peuvent être réalisées afin d'augmenter la surface de contact et/ou à former des zones de blocage de la matière polymère au niveau de la surface formée par l'arrête d'un tel insert métallique **6** en évitant ainsi tout problème de délamination.

Il ressort de ce qui précède qu'un patin antidérapant monolithique conforme à l'invention présente de nombreux avantages, parmi lesquels on peut citer :
- il est particulièrement résistant aux sollicitations de traction et de compression transmises par les agrafes, et de manière générale par les moyens de solidarisation et chaque élément de jonction agencé entre les différents patins antidérapants ;
- il garantit une adhérence optimale aux véhicules sur des chaussées qui peuvent être à la fois neigeuses ou glacées ;
- il permet de conférer de manière concomitante allègement du dispositif antidérapant, réduction de son épaisseur, et optimisation de l'adhérence, notamment sur route verglacée.

## Revendications

1. Chemin de roulement continu d'un dispositif antidérapant pour pneumatique (5) de véhicule automobile, destiné à être rapporté sur la bande de roulement dudit pneumatique, ledit chemin de roulement étant défini par une pluralité de patins monolithiques (2) solidarisés entre eux par des éléments de jonction adjacents (1, 11), ***caractérisé :***
• **en ce que** les patins monolithiques (1) comportent au moins un insert rigide (6), ledit insert présentant :
- une direction longitudinale destinée à être orientée dans le sens de la largeur du pneumatique d'une roue de véhicule, et
- des moyens de solidarisation auxdits éléments de jonction (1, 11) des patins entre eux, de telle sorte à constituer le chemin de roulement du dispositif antidérapant ;
• et **en ce que** lesdits patins (2) comportent une enveloppe (3) réalisée en un matériau polymère, surmoulant au moins partiellement ledit au moins un insert rigide (6).

2. Chemin de roulement continu d'un dispositif antidérapant selon la revendication 1, ***caractérisé* en ce que** les patins monolithiques (5) comportent une portion centrale réalisée en matériau polymère comportant une pluralité d'ouvertures (21, 22, 23).

3. Chemin de roulement continu d'un dispositif antidérapant selon la revendication 2, ***caractérisé* en ce que** tout ou partie des ouvertures (21, 22, 23) sont débouchantes.

4. Chemin de roulement continu d'un dispositif antidérapant selon l'une des revendications 2 ou 3, ***caractérisé* en ce que** tout ou partie desdites ouvertures (21, 22, 23) comportent une forme hexagonale.

5. Chemin de roulement continu d'un dispositif antidérapant selon l'une des revendications 2 et 3, ***caractérisé* en ce que** la portion centrale en matériau polymère comporte une surface nervurée (24) destinée à augmenter localement l'épaisseur de ladite portion centrale.

6. Chemin de roulement continu d'un dispositif antidérapant selon l'une des revendications 1 à 5, ***caractérisé* en ce que** ledit au moins un insert rigide (6) des patins monolithiques (5) comporte des zones poinçonnées formant une pluralité de protubérances (31) émergeant de l'enveloppe en matériau polymère desdits patins.

7. Chemin de roulement continu d'un dispositif antidérapant selon la revendication 6, ***caractérisé* en ce que** lesdites protubérances (31) comportent chacune une forme rectiligne.

8. Chemin de roulement continu d'un dispositif antidérapant selon la revendication 7, ***caractérisé* en ce que** les protubérances (31) sont agencées les unes par rapport aux autres selon des orientations perpendiculaires et parallèles.

9. Chemin de roulement continu d'un dispositif antidérapant selon la revendication 7, ***caractérisé* en ce que** les protubérances (31) sont inclinées à 45° et/ou à 135° par rapport à ladite direction longitudinale des inserts.

10. Chemin de roulement continu d'un dispositif antidérapant selon l'une des revendications 6 et 7, ***caractérisé* en ce que** lesdites protubérances (31) émergent de l'enveloppe en matériau polymère d'une hauteur sensiblement égale à celle de la surface nervurée (24) de la portion centrale.

11. Chemin de roulement continu d'un dispositif antidérapant selon l'une des revendications 1 à 10, ***caractérisé* en ce que** les moyens de solidarisation des patins (5) aux éléments de jonction adjacents (1, 11) sont constitués par des orifices débouchants (8, 9), ménagés au voisinage des extrémités de l'insert, lesdits orifices débouchants (8, 9) étant destinés à être traversés par des agrafes (32, 33), elles-mêmes solidarisées auxdits éléments de jonction adjacents.

12. Chemin de roulement continu d'un dispositif antidérapant selon l'une des revendications 1 à 11, ***caractérisé* en ce que** l'enveloppe (3) est réalisée en élastomère, et notamment en polyuréthane.

## Patentansprüche

1. Durchgehende Lauffläche einer Schneekette für einen Fahrzeugreifen (5), die dazu bestimmt ist, auf dem Reifenprofil befestigt zu werden, wobei die Lauffläche durch eine Vielzahl von monolithischen Greifplatten (2) definiert ist, die durch benachbarte Verbindungselemente (1, 11) miteinander verbunden sind, **dadurch gekennzeichnet,**
• **dass** die monolithischen Greifplatten (1) mindestens einen starren Einsatz (6) aufweisen,
wobei der Einsatz Folgendes umfasst:
eine Längsrichtung, die dazu bestimmt ist, zur Breite des Fahrzeugreifens ausgerichtet zu sein, und
Befestigungsmittel der Greifplatten untereinander an den Verbindungselementen (1, 11), so dass sie die Lauffläche der Schneekette bilden;
• und **dass** die Greifplatten (2) eine Hülle (3) aus einem polymeren Material umfassen, die den mindestens einen starren Einsatz (6) zumindest teilweise umformen.

2. Durchgehende Lauffläche einer Schneekette gemäß Anspruch 1, **dadurch gekennzeichnet, dass** die monolithischen Greifplatten (5) einen zentralen Abschnitt aus Polymermaterial mit einer Vielzahl von Öffnungen (21, 22, 23) umfassen.

3. Durchgehende Lauffläche einer Schneekette gemäß Anspruch 2, **dadurch gekennzeichnet, dass** die Öffnungen (21, 22, 23) ganz oder teilweise durchgängig sind.

4. Durchgehende Lauffläche einer Schneekette gemäß einem der Ansprüche 2 oder 3, **dadurch gekennzeichnet, dass** alle oder ein Teil der Öffnungen (21, 22, 23) eine hexagonale Form aufweisen.

5. Durchgehende Lauffläche einer Schneekette gemäß einem der Ansprüche 2 und 3, **dadurch gekennzeichnet, dass** der Mittelabschnitt aus Polymermaterial eine gerippte Oberfläche (24) zum lokalen Erhöhen der Dicke des Mittelabschnitts aufweist.

6. Durchgehende Lauffläche einer Schneekette gemäß einem der Ansprüche 1 bis 5, **dadurch gekennzeichnet, dass** der mindestens eine starre Einsatz (6) der monolithischen Greifplatten (5) gestanzte Bereiche aufweist, die eine Vielzahl von Vorsprüngen (31) bilden, die aus der Hülle aus Polymermaterial der Greifplatten austreten.

7. Durchgehende Lauffläche einer Schneekette gemäß Anspruch 6, **dadurch gekennzeichnet, dass** die Vorsprünge (31) jeweils eine geradlinige Form aufweisen.

8. Durchgehende Lauffläche einer Schneekette gemäß Anspruch 7, **dadurch gekennzeichnet, dass** die Vorsprünge (31) untereinander senkrecht und parallel angeordnet sind.

9. Durchgehende Lauffläche einer Schneekette gemäß Anspruch 7, **dadurch gekennzeichnet, dass** die Vorsprünge (31) um 45° und/oder um 135° in Bezug auf die Längsrichtung der Einsätze geneigt sind.

10. Durchgehende Lauffläche einer Schneekette gemäß einem der Ansprüche 6 und 7, **dadurch gekennzeichnet, dass** die Vorsprünge (31) aus der Hülle aus Polymermaterial in einer Höhe hervortreten, die im Wesentlichen gleich der der gerippten Oberfläche (24) des Mittelabschnitts ist.

11. Durchgehende Lauffläche einer Schneekette gemäß einem der Ansprüche 1 bis 10, **dadurch gekennzeichnet, dass** die Befestigungsmittel der Greifplatten (5) an den benachbarten Verbindungselementen (1, 11) durch Durchgangslöcher (8, 9) gebildet sind, die in der Nähe der Enden des Einsatzes vorgesehen sind, wobei die Durchgangslöcher (8, 9) dazu bestimmt sind, von Klammern (32, 33) durchquert zu werden, die selbst an den benachbarten Verbindungselementen befestigt sind.

12. Durchgehende Lauffläche einer Schneekette gemäß einem der Ansprüche 1 bis 11, **dadurch gekennzeichnet, dass** das Gehäuse (3) aus Elastomer und insbesondere Polyurethan besteht.

## Claims

1. A continuous tread of an anti-skid device for a motor vehicle tyre (5), which tread is designed to be mounted on the tread of said tyre, said continuous tread being defined by a plurality of monolithic gripping plates (2) that are secured together by adjacent coupling elements (1, 11), said continuous tread being **characterized:**
• **in that** each of the monolithic gripping plates (1) includes at least one rigid insert (6), said insert having:
- a longitudinal direction that is to be oriented in the width direction of the tyre of a vehicle wheel; and
- means for securing to said coupling elements (1, 11) for coupling together the gripping plates, in such a manner as to constitute the tread of the anti-skid device;
• and **in that** each of said gripping plates (2) includes a casing (3) made of a polymer material and molded over said at least one rigid insert (6) at least in part.

2. A continuous tread of an anti-skid device according to claim 1, **characterized in that** each of the monolithic gripping plates (5) has a central portion made of a polymer material provided with a plurality of openings (21, 22, 23).

3. A continuous tread of an anti-skid device according to claim 2, **characterized in that** all or some of the openings (21, 22, 23) are through openings.

4. A continuous tread of an anti-skid device according to claim 2 or claim 3, **characterized in that** all or some of the openings (21, 22, 23) have hexagonal shapes.

5. A continuous tread of an anti-skid device according to claim 2 or claim 3, **characterized in that** the central portion made of a polymer material has a ribbed surface (24) designed to increase the thickness of said central portion locally.

6. A continuous tread of an anti-skid device according to any one of claims 1 to 5, **characterized in that** said at least one rigid insert (6) of each of the monolithic gripping plates (5) has punched zones forming a plurality of protuberances (31) emerging from the casing made of a polymer material of each of said gripping plates.

7. A continuous tread of an anti-skid device according to claim 6, **characterized in that** each of the protuberances (31) has a rectilinear shape.

8. A continuous tread of an anti-skid device according to claim 7, **characterized in that** the protuberances (31) are arranged relative to one another in perpendicular and parallel orientations.

9. A continuous tread of an anti-skid device according to claim 7, **characterized in that** the protuberances (31) are inclined at 45° and/or at 135° relative to said longitudinal direction of the inserts.

10. A continuous tread of an anti-skid device according to claim 6 or claim 7, **characterized in that** said protuberances (31) emerge from the casing made of a polymer material by a height substantially equal to the height of the ribbed surface (24) of the central portion.

11. A continuous tread of an anti-skid device according to any one of claims 1 to 10, **characterized in that** the means for securing the gripping plates (5) to the adjacent coupling elements (1, 11) are constituted by through orifices (8, 9) provided in the vicinities of the ends of the insert, said through orifices (8, 9) being designed to receive fasteners (32, 33) through them, which fasteners are themselves secured to said adjacent coupling elements.

12. A continuous tread of an anti-skid device according to any one of claims 1 to 11, **characterized in that** the casing (3) is made of an elastomer, and in particular of polyurethane.
